# EUROPEAN PATENT SPECIFICATION

(11) **EP 4 240 995 B1**
(45) Date of publication and mention of the grant of the patent: **07.01.2026**
(21) Application number: 21815113.2
(22) Date of filing: 08.11.2021
(51) Int. Cl.: F16K 5/04, F16K 15/18, F16K 27/06

(54) **CHECK VALVE ASSEMBLY**
RÜCKSCHLAGVENTILANORDNUNG
ENSEMBLE CLAPET ANTIRETOUR

(30) Priority: 09.11.2020 LU 102188
(43) Date of publication of application: 13.09.2023
(73) Proprietor: Aliaxis Research & Technology, 78990 Élancourt (FR)
(72) Inventor: COSTA, Stefano, 78540 Vernouillet (FR); ZANNI, Rodolfo, 78540 Vernouillet (FR); DELAIR, Vanessa, 78540 Vernouillet (FR); JOUBERT, Pierre, 78540 Vernouillet (FR); CAVALIÉ, Henri-Xavier, 78540 Vernouillet (FR); REY, Charlotte, 78540 Vernouillet (FR); LE GOFF, Jean-Philippe, 78540 Vernouillet (FR)
(74) Representative: Sonnenberg Harrison Partners
(86) International application number: PCT/EP2021/080955
(87) International publication number: WO 2022/096715

(56) References cited:
- WO-A1-2020/099380
- US-A- 3 474 818
- US-A- 3 851 665
- US-A- 4 736 771
- US-A- 4 989 631
- US-A- 5 373 868
- US-B2- 9 693 842

## Description

### TECHNICAL FIELD

The present invention relates to the field of hydraulic networks, such as water supply installations that include check valves for excluding contaminations by back flow. More precisely, the present invention relates to a check valve assembly, a hydraulic network comprising such a check valve assembly and a method of maintenance of such a check valve assembly.

### PRIOR ART

On Hot & Cold sanitary networks, at the transition between the main circuits (risers, collectors main supply lines) and second fix lines, non-return valves or check valves are implemented to avoid back flow of water that has stagnated in the second fix lines to the main supply lines. Check valves also help to prevent retro contamination from one room to another.

The check valve assemblies usually don't include a moving mechanism but irrespective as to whether they are configured with or without moving parts they have to be implemented in such a way that allows the replacement of parts such as the check valve itself and maintenance operations with a "shut-off" of the fluidic communication towards the second fix line or in general between an upstream and a downstream side. It is most common practice to have one stop valve and one check valve for one or more second fix lines, which means an important number of those two valves especially in non-residential buildings.

Whenever cleaning or maintenance operations are required, the check valves have two bleed holes so that they can be tested without having to dismantle them: the stop valve is activated, the upstream port is opened, and if there is an abundance of water, the system is faulty and needs to be dismantled. This maintenance action is time-consuming and not appreciated by the maintenance teams, because of the flow of black water. Therefore, existing check valves are simply disconnected replaced by a new check valve. Indeed, check valves get clogged and corroded over time. With other words, check valves are fully replaced instead of being controlled and maintained. The known check valves are mainly composed of brass parts, seen as consumable parts. US 4736771 A teaches a check valve assembly according to the preamble of claim 1 and a method of maintaining a check valve assembly according to the preamble of claim 25.

The maintenance operation therefore requires many steps which is time consuming, in particular in complex networks. In addition, the common configuration requires an important number of valves, including check valves and stop valves.

It is one object of the present invention to provide a check valve assembly which can be maintain easily and quickly.

### SUMMARY OF THE INVENTION

These and other objects of the present invention are achieved by a check valve assembly according to claim 1, and a hydraulic system according to claim 24, and a method of maintenance according to claim 25.

According to the invention, the check valve comprises a main housing having main fluid passage extending along a main flow axis) between a first port connectable to a first pipe and a second port connectable to second pipe, a shut off element disposed at least in part within the main housing, said shut off element extending along a shut off element axis, a check valve. The shut off element is displaceable between a working position in which the shut off element allows a fluid flow between the first port and the second port and through the check valve, and a service position blocking the fluid flow through the shut off element. The check valve receiving element is disposed at least in part within the main housing for removably accommodating the check valve. The check valve receiving element being displaceable along the shut off element axis only while the shut off element is in the service position to allow the removal of the check valve. The check valve receiving element is fixedly arranged within the shut off element displaceable substantially in a transverse direction. The check valve receiving element is an actuation element for rotating the shut off element, between the working position and the service position and vice-versa. The check valve is accommodated in the actuation element.

Therefore, it becomes possible to choose between an operative position in which the check valve assembly allows the fluid flows along the main flow axis, and a stop position in which the check valve assembly effectively blocks the fluid flow, in spite of persisting high pressure whilst allowing an inspection and/or replacement of parts remote of the remaining installation e.g. for maintenance or cleaning. Advantageously, critical parts of the check valve assembly, such as the joints and the check valve itself, can be inspected from all sides. **In** addition, the use of cleaning tools in case needed is made easy just as if the entire check valve assembly was dismounted as in the prior art but with only having to handle a small part of the assembly. Contrary to the prior art, the shut-off function is implemented into the check valve assembly as such, thus reducing the parts and time needed for maintenance. Furthermore, the fact of combining shut off function and the allowance of removal of the check valve is also a strong safety aspect allowing to avoid inadvertent leakages.

**In** one embodiment, the check valve receiving element is removable from the main housing, when the shut off element is in the service position. This allows an easier access to the check valve and the check valve assembly.

Preferably, the shut off element is rotatable from the working position to the service position, and vice-versa.

The check valve receiving element may be rotatable about said shut off element axis.

In one embodiment, the check valve is removable from the shut off element in a direction different from the check valve axis, in particular in direction perpendicular the check valve axis, preferably in the direction along said shut off element axis. To allow the removal of the check valve, it is preferred to have a movement along said shut off element axis, to give access to the check valve.

On one embodiment, the shut off element comprises a rotatable cylindrical portion extending along said shut off element axis, wherein the actuation element comprises a user operation part and a actuation part, the actuation part being removably inserted within the cylindrical portion, in particular wherein the actuation part can be displaced along said shut off element axis to remove the actuation part from the shut off element when the shut off element is in the stop position.

Providing a cylindrical shut off element with a shut off element axis orthogonal to the main flow axis allow s obtaining a compact assembly.

In a further aspect of the present invention, the control element, housing a shut off element of the check valve is rotatably mounted to the main housing, between a working position in which the first through hole extends along the main flow axis, and a service position in which the first through hole does not extend along the main flow axis. With such a rotational movement, it becomes easy for a user to operate the check valve and select the desired position. The check valve may be equipped with a locking system to allow e.g. to install a lock to hinder any inadvertent moving of the check valve.

In one embodiment, the cylindrical portion comprises a cylindrical wall with two diametrically opposed holes, wherein in the working position, the two diametrically opposed holes are aligned with the entry port and the output port, and in the service position, the cylindrical wall obstructs the input port.

In one embodiment, the cylindrical portion and /or the body housing has/have a bottom provided with one or more leaking ports. This allows evacuation of the grey water during maintenance and cleaning.

A movement restriction device may be provided to hinder axial movement of the cylindrical portion along the shut off element axis. This prevents unwanted movement if the shut off element. In one embodiment the movement restriction device comprises at least one of radial projections of the cylinder portion projecting against an inner wall of the main housing, preferably circumferentially spaced apart at one end thereof, to maintain the cylindrical portion into the main housing, and of the bottom of the cylindrical portion resting again the housing.

In one embodiment, the actuation part comprises a valve channel between a channel input port and a channel output port to accommodate the check valve therein, and wherein, when the actuation part is inserted into the cylindrical portion, the two diametrically opposed holes of the cylindrical portion, the channel input port and the channel output port of the valve channel are aligned to form a valve fluid passage.

The check valve can only be inserted into the valve channel (46) so that its output port is in the output side of the valve channel and its input is on the input side of the valve channel, to prevent positioning of the check valve is the wrong direction of operation.

In one embodiment, the check valve abuts again a stop seat inside the actuation part on the channel output port side of the actuation part, and a removable holding element on the channel input side is provided to maintain the check valve within the channel valve, in particular the holding element having a hole to allow the flow of fluid, in use. This allows correct positioning of the valve and holding of the check valve during movement back to the operating position.

Sealing elements are advantageously provided on both sides of the valve channel, wherein the holding element is provided with a removable gasket, in particular made of EPDM.

At least one of the sealing elements on both side of the check valve channel are removably provided on the actuation part, to allow easy maintenance and replacement of the sealing elements.

Cooperating positioning elements may be provided on the cylindrical portion and on the actuation part, adapted to guide insertion of the actuation part such that the actuation part can be inserted in only one position, thereby preventing repositioning of the actuation part in the wrong direction of flow.

In one embodiment, the positioning elements comprise ribs on one of the actuation part and of the cylindrical portion engaged with grooves on the other one of the actuation part and the cylindrical portion.

Axial stops elements may be provided to stop axial movement of the actuation part, in particular two projection stops on the actuation part radially projecting towards the cylindrical portion adapted to abut against the cylindrical portion when the actuation part has reached its axial position within the cylinder portion.

In one embodiment, a locking element is provided to lock the actuation part into the cylindrical portion in the working position, and to allow the removal of the actuation part only when the shut off element is in the stop position.

In one embodiment, the cylindrical wall of the cylindrical part provides a seal which is adapted to withstand the pressure of fluid at the input side when the shut off element is in a stop position.

In one embodiment, the housing, the shut off element and/or the knob are made of polymer.

In one embodiment, the shut off element off is slideable from the working position to the service position, and vice-versa.

The present invention also proposes a hydraulic system comprising a check valve assembly as described above.

The present invention further proposes a method of maintaining a check valve assembly as described above. The method comprises displacing the shut off element from the working position to the service position, to stop the flow of fluid through the shut off element, displacing the check valve receiving element along said the shut off element axis Y to allow the removal of the check valve from the check valve receiving element, maintaining the check valve assembly, comprising at least one of cleaning the shut off element, replacing the check valve within the check valve receiving element, and/or replacing sealing elements within the check valve receiving element and/or the removable maintaining element, displacing the check valve receiving element back into the shut off element, displacing the shut off element back to the working position. The shut off element is rotated by the check valve receiving element between the working position and the service position. The replacing of the check valve within the check valve receiving element comprises accommodating the check valve in the check valve receiving element.

In one embodiment, the check valve receiving element is the actuation part of the actuation element, the shut off element is rotated around the shut off element axis by the actuation part (44), the actuation part is axially displaced along said the shut off element axis and removed from the shut off element, and the check valve is removed from the actuation part, so that the check valve is removed from the shut off element by a movement in a direction of the shut off element axis and a movement in the direction of the check valve axis.

Indeed, the removal is governed by a security system. In one example the security system is such that the removal of the control element is inhibited unless the check valve is set to the service position.

Still other aspects, features, and advantages of the present invention are readily apparent from the following detailed description, simply by illustrating a preferable embodiments and implementations. The present invention is also capable of other and different embodiments and its several details can be modified in various obvious aspects, all without departing from the scope of the present invention as defined by the claims. Accordingly, the drawings and descriptions are to be regarded as illustrative in nature, and not as restrictive. Additional objects and advantages of the invention will be set forth in part in the description which follows and in part will be obvious from the description or may be learned by practice of the invention.

### DESCRIPTION OF THE DRAWINGS

The invention is described hereinafter with reference to the enclosed drawings, in which:
Fig. 1 is a check valve assembly according to a first aspect of the present disclosure,
Fig. 2 is the check valve assembly of Fig.1 in one aspect of the present disclosure,
Fig. 3 is an exploded view of the check valve assembly of Figs 1 and 2 according to the present disclosure,
Fig. 4 is a shut off element of the check valve assembly of Fig. 1 according to the present disclosure,
Fig. 5 shows an actuation element of the check valve assembly of Fig. 1 according to the present disclosure,
Fig. 6 is a holding element of a check valve according to another aspect of the present disclosure.

### DETAILED DESCRIPTION

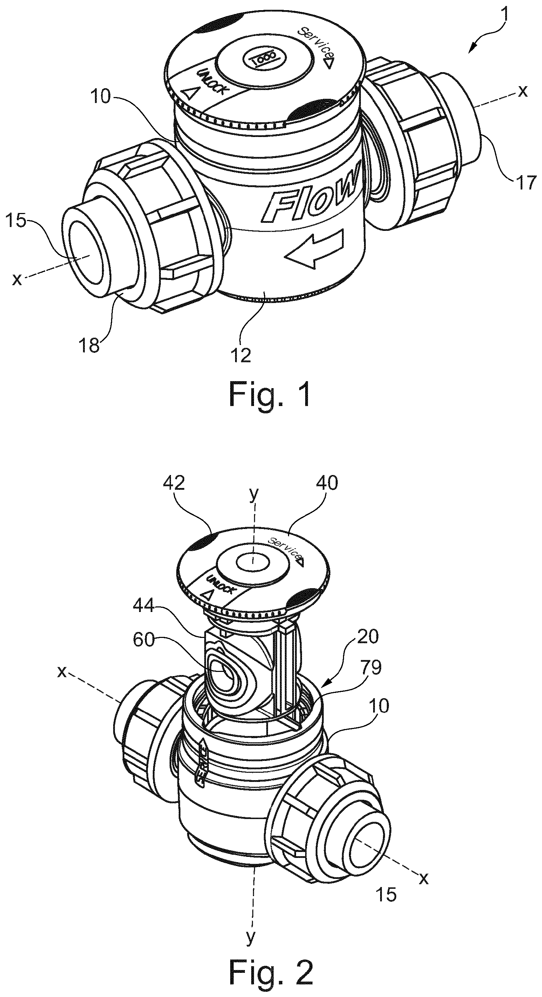

Figures 1 to 3 illustrate a check valve assembly 1 according to a first aspect of the present disclosure.

The check valve assembly 1 comprises a housing 10, a shut off element 20 disposed within the housing 10, and a check valve 60.

The housing has a housing body 12, an input port 17 connectable to a first pipe and an output port 18 connectable to a second pipe, with a main fluid passage 15 extending along a main flow axis X.

The housing body is cylindrical and extends along a shut off element axis Y. In the example, the shut off element axis Y is orthogonal to the main flow axis X.

The shut off element 20 is rotatably mounted within the housing 10, between a working position in which the shut off element 20 allows the fluid to flow from the input port 17 to the output port 18 and through the check valve 60, and a stop position blocking the fluid flow through the shut off element.

The angle between the working position and the stop position is preferably 90 degrees. An angle of 90 degrees is easy to provide and is easy for a user. Of course, this is not limiting the invention and other angles and orientations and rotation axis can be provided.

The shut off element 20 comprises a cylindrical portion 24 received within the housing body 12. The cylindrical portion 24 is extending along said shut off element axis Y. The cylindrical portion 24 is rotatable around the shut off element axis Y.

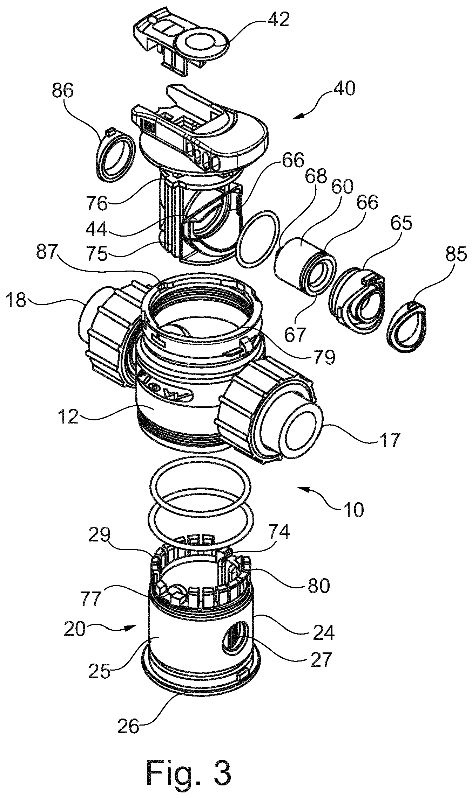

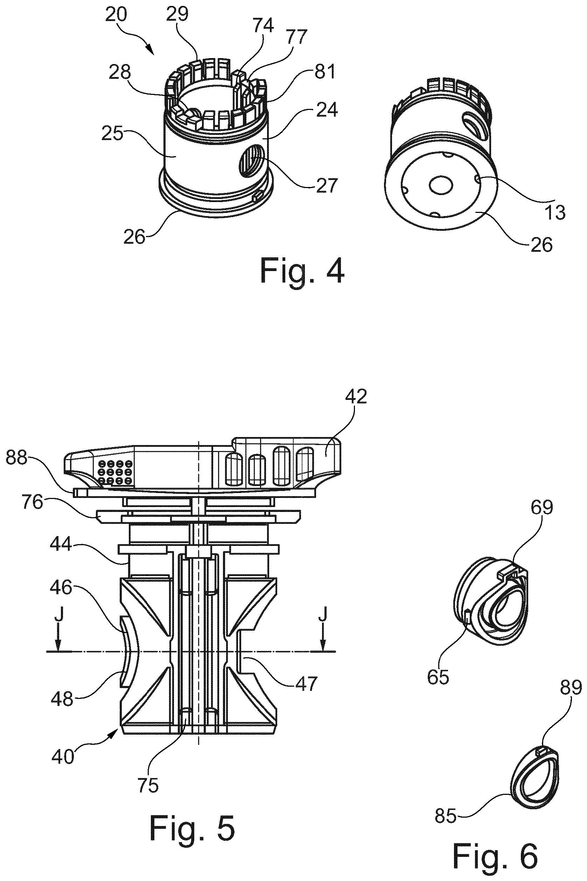

As seen on Figs. 3 and 4, the cylindrical portion 24 comprises a cylindrical wall 25 with two diametrically opposed holes 27, 28. As will be apparent from the description, in the working position, the two diametrically opposed holes 27, 28 are aligned with the input port 17 and the output port 18, to allow the fluid flow, and in the stop position, the cylindrical wall obstructs the input port to stop the fluid flow.

The width the of cylinder wall 25 is chosen so that the cylinder wall 25 can withstand the pressure when the shut off element is in the stop position. The cylindrical wall of the cylindrical part 24 provides a seal which is adapted to withstand the pressure of fluid at the input side when the shut off element is in a stop position.

The cylindrical portion 24 comprises a bottom 26, forming the bottom of the cylindrical housing body 12, and an open upper end 29. This is not limiting the invention and the cylindrical housing body 12 may have a bottom whilst the cylindrical portion has no bottom, or the cylindrical housing body 12 may have a bottom and the cylindrical portion as well.

The bottom 26 may be provided with one or more leaking ports 13, visible on Fig. 4. As will be apparent from the following description, the dirty water which was trapped in the shut off element can escape through the leaking ports during maintenance and cleaning of the check valve assembly.

An actuating element such as a knob 40 is provided for rotating the shut off element 20.

Shut off element positioning elements 80 are provided to control the rotation and positioning of the shut off element within the housing.

The knob 40 has a user operation part 42 and an actuation part 44 removably inserted into the cylindrical portion 24.

As best seen on Fig 5, the actuation part 44 comprises a valve channel 46 between a channel input port 47 and a channel output port 48.

The two diametrically opposed holes 27, 28 of the cylindrical portion 24, the channel input port 47 and the channel output port 48 of the valve channel 46 are aligned to form a valve fluid passage 50.

The check valve 60 is accommodated into said valve channel 46, hence into said valve fluid passage, to let the fluid flow in one direction, from the input side to the output side.

The check valve 60 is a cartridge check valve, allowing flow of fluid from a check valve input side 67 to the check valve output side 68. The cartridge is cylindrical.

The check valve 60 can be inserted into the valve channel 46 through the channel input port 47.

The channel output port 48 has a diameter smaller than the diameter of the check valve, so that it is not possible to insert the check valve 60 through the channel output port 48. Further, the diameter of the channel input port 47 is larger than the diameter of the check valve 60 on the valve output end side 68, but the diameter of the channel input port 47 is smaller than the diameter of the annular joint on the check valve input side 67. Therefore, the check valve can only be inserted so that its output port 68 is in the output side 48 of the valve channel and its input 67 is on the input side 48 of the valve channel. Of course, this is not limiting the invention and, in some embodiments, the check valve could be inserted into the valve channel through the channel output port.

Once inserted into the actuation part 44, the check valve 60 abuts again a stop seat 66 inside the actuation part 44 on the channel output port side of the actuation part. A removable holding element 65 on the channel input side of the actuation part is provided to maintain the check valve within the channel valve 46. It is understood that the holding element 65 has a hole to allow the flow of fluid, in use.

A first sealing element 85 is provided at the output port side of the valve channel 46. The first sealing element may be integral with the actuation part or may be detachably mounted to the actuation part 44 to allow replacing the sealing element 85. The holding element 65 is provided with an EPDM gasket 86 to seal the input port 47 of the valve channel 46.

The gasket 85 is preferably removably mounted to the holding element 65. In the example of Fig. 6, the gasket 86 can be clipped via a clip 89 received in a clip zone 89 of the holding element 65.

As previously mentioned, the actuation part 44 is removably inserted into the cylindrical portion 24. The actuation part 44 can be displaced along said shut off element axis Y to remove the actuation part 44 from cylindrical portion the shut off element when the shut off element is in the stop position. The actuation part 44 can pass through the upper end 29 of the cylindrical portion.

Cooperating knob positioning elements 74, 75 are provided on the cylindrical portion 24 and on the actuation part 44, for the insertion of the actuation part into the cylindrical portion in the correct position. It should be understood that these positioning elements are also used to maintain the relative orientation between the cylindrical part and the actuation part, and to transmit the rotation of the actuation part to the cylindrical portion 24 via the contact surfaces therebetween. In the present embodiment, the cylindrical portion 24 has ribs 74 on its inner side, which are designed to cooperate with corresponding grooves 75 on the actuation part 44.

When reassembling the actuation part 44 with the cylindrical housing 24, the ribs must be engaged in the corresponding grooves. It should be noted that the number grooves and ribs is given as a non-limiting example. Similarly, the ribs may be located on the removable part whereas the grooves may be positioned on the housing. It is also possible to have ribs and grooves on the cylindrical portion cooperating with corresponding grooves and ribs on the actuation part.

Ribs and grooves are given as example and any cooperating positioning parts may be contemplated as well.

Stops elements 76 can also be provided, to stop the axial movement of the actuation part during insertion and to ensure that the actuation part is at the correct axial position within the cylinder portion. In the present embodiment, at least one projection 76 on the actuation part radially projecting towards the cylindrical portion is adapted to abut axially against the cylindrical portion stop surface 77.

Further, the cooperating position elements 74, 75 and/or the stops elements 76 are provided such that the actuation part can be inserted in only one position, thereby preventing repositioning of the actuation part in the wrong direction of flow.

A locking device is provided to prevent removal of the knob as long as the shut off element is not in the stop position. In this embodiment, the locking device comprises the stop elements 76, which at the upper end of the actuation part 44, which, in the working position of the shut off element 20, abut axially against an axial stop surface 79 projecting radially inwardly from the upper end of the cylinder housing body 12, as can be seen on Fig. 3.

The cylindrical portion 24 of the shut off element cannot be removed from the housing 10. The cylindrical portion 24 of the shut off element 20 is provided with a plurality of grip elements 71 spaced apart on its upper outer circumference. The grip elements 81 are sliding in a circumferential slider 11 protruding radially inwardly from the cylindrical housing body. The grip elements 81 allows the rotation of the cylindrical portion 24 within the cylindrical housing body 12, whilst preventing removal of the cylindrical portion 24 from the cylindrical housing body. It should be understood that the bottom 26 of the cylindrical portion 24 also prevents axial movement of the cylindrical portion, in particular towards the upper end of the valve housing. Therefore, both the grip elements 81 and the bottom 26 form movement restriction elements to hinder axial movement of the cylindrical portion along the shut off element axis.

Visual indicators are provided on the knob 40, to let a user know in which position the knob, and hence the shut off element, is. In one example, an indicator with the wording "service" is provided, but this is not limiting the invention.

The use of the valve is therefore safe.

The shut off element and the actuation part are made of polymer, instead of metal in the prior art.

In the working position of the shut off element 20, the two diametrically opposed holes 27, 28 of the cylindrical portion 24 are aligned with the input port 17 and the output port 18 of the check valve assembly. With other words, the valve fluid passage 50 is aligned in the main fluid passage 15 of the housing, allowing the flow of fluid from the input port of the housing through the check valve 60 in the valve fluid passage and to the output port of the housing.

Whenever cleaning or maintenance operations are needed, the user operation part 42 can be actuated to rotate the actuation part 44, thereby rotating the shut off element from the working position to the service position. In the service position, the shut off element 20, i.e. the cylindrical portion 24 and the actuation part 44, have rotated around said shut off element axis, thereby closing the input port and the output port with the cylinder portion wall. The flow of fluid is stopped.

Once in the service position, the actuation part 44 can be displaced along said the shut off element axis Y and removed from the shut off element 12. The shut off element may be cleaned, the check valve can be replaced by a new check valve, and/or the sealing elements can be changed.

The actuation part 44 is then inserted back into the cylindrical portion 24, and a reverse rotation back to the working position.

It should be noted that the user actuating part 42 also provides as locking system preventing the rotation of the shut off element 20. Indeed, the user actuating part 42 has a locking position, in which the user actuating part is folded back and locked via a lock 88 into a corresponding groove 87 in the housing wall, and a deployed position, in which the user actuating part is used to actuate the rotation of the shut off element 20. With other words, the user actuating part and the corresponding groove form a locking system to hinder any inadvertent moving of the check valve assembly in the operative/working position.

In the example described in reference to figures 1 to 6, the shut off element and the check valve receiving element are rotatable between the working position in which the shut off element allows a fluid flow between the first port and the second port and through the check valve, and the service position blocking the fluid flow through the shut off element.

This is not limiting the invention and other movements such as a sliding movement are also contemplated. The shut off element may be slidably mounted within the housing, between a working position in which the shut off element allows the fluid to flow from the input port to the output port and through the check valve, and a service position blocking the fluid flow through the shut off element.

Therefore, contrarily to the prior art check valves which do not offer options to disassemble the valve while the valve is installed on the water network, the check valve of the present invention can be dismantled and cleaned in service. This has the advantage of extending the lifespan of the check valve and ensuring a better water quality in the network.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto.

## Claims

1. Check valve assembly comprising
a main housing (10) having main fluid passage extending along a main flow axis (X) between a first port connectable to a first pipe and a second port connectable to second pipe,
a shut off element (20) disposed at least in part within the main housing (10), said shut off element (20) extending along a shut off element axis (Y),
a check valve (60),
wherein the shut off element (20) is displaceable between a working position in which the shut off element (20) allows a fluid flow between the first port and the second port and through the check valve (60), and a service position blocking the fluid flow through the shut off element (20),
a check valve receiving element (40) disposed at least in part within the main housing (10),
the check valve receiving element (40) is an actuation element for rotating the shut off element (20), between the working position and the service position and vice-versa,
**characterised in that**
the check valve receiving element (40) is for removably accommodating the check valve (60) in the check valve receiving element (40), the check valve receiving element (40) being displaceable along the shut off element axis (Y) only while the shut off element (20)
is in the service position to allow the removal of the check valve (60),
the check valve receiving element (40) is fixedly arranged within the shut off element (20) displaceable substantially in a transverse direction, and
the check valve (60) is accommodated in the actuation element.

2. Check valve assembly according to claim 1, wherein the check valve receiving element (40) is removable from the main housing (10), when the shut off element (20) is in the service position.

3. Check valve assembly according to any of claims 1 to 2, wherein the shut off element (20) is rotatable from the working position to the service position, and vice-versa.

4. Check valve assembly according to any claims 1 to 3, wherein the check valve receiving element (40) is rotatable about said shut off element axis (Y).

5. Check valve assembly according to any of the preceding claims, wherein the check valve (60) has a check valve axis and the check valve (60) is removable from the shut off element (20) in a direction different from the check valve axis, in particular in direction perpendicular the check valve axis, preferably in the direction along said shut off element axis (Y).

6. Check valve assembly according to any of the preceding claims, wherein the shut off element (20) is cylindrical and wherein the shut off element axis (Y) is orthogonal to the main flow axis (X).

7. Check valve assembly according to any of claims 1 to 6, wherein the shut off element (20) comprises a rotatable cylindrical portion (24) extending along said shut off element axis (Y), wherein the actuation element (40) comprises a user operation part (42) and an actuation part (44), the actuation part (44) being removably inserted within the cylindrical portion (24), in particular wherein the actuation part (44) can be displaced along said shut off element axis (Y) to remove the actuation part (44) from the shut off element (20) when the shut off element (20) is in the service position.

8. Check valve assembly according to claim 7, wherein the cylindrical portion (24) comprises a cylindrical wall (25) with two diametrically opposed holes (27, 28), wherein in the working position, the two diametrically opposed holes (27, 28) are aligned with the entry port (17) and the output port (18), and in the service position, the cylindrical wall (25) obstructs the input port (17).

9. Check valve assembly according to claim 7 or 8, wherein the cylindrical portion (24) and /or a body housing (12) has/have a bottom provided with one or more leaking ports (13).

10. Check valve assembly according to any of claim 7 to 9, wherein a movement restriction device is provided to hinder axial movement of the cylindrical portion (24) along the shut off element axis.

11. Check valve assembly according to any of the preceding claim, wherein the movement restriction device comprises at least one of radial projections of the cylinder portion (24) projecting against an inner wall of the main housing (10), preferably circumferentially spaced apart at one end thereof, to maintain the cylindrical portion (24) into the main housing (10), and of the bottom of the cylindrical portion (24) resting again the housing.

12. Check valve assembly according to according to any of claim 7 to 11, wherein the actuation part (44) comprises a valve channel (46) between a channel input port (47) and a channel output port (48) to accommodate the check valve (60) therein, and wherein, when the actuation part (44) is inserted into the cylindrical portion (24), the two diametrically opposed holes (27, 28) of the cylindrical portion (24), the channel input port (47) and the channel output port (48) of the valve channel (46) are aligned to form a valve fluid passage (50).

13. Check valve assembly according to claim 12, wherein the check valve (60) can only be inserted into the valve channel (46) so that an output port thereof is on the side of the channel output port (48) and an input port thereof is on the side of the channel input port (47).

14. Check valve assembly according to claim 12 or 13, wherein the check valve (60) abuts again a stop seat (66) inside the actuation part (44) on the channel output port side of the actuation part (44), and a removable holding element (65) on the channel input port side is provided to maintain the check valve (60) within the valve channel (46), in particular the holding element (65) having a hole to allow the flow of fluid, in use.

15. Check valve assembly according to claim 12 to 14, wherein sealing elements (85) are provided on both sides of the valve channel (46), wherein the holding element (65) is provided with a removable gasket, in particular made of EPDM.

16. Check valve according to claim 12 to 15, wherein at least one of the sealing elements (85) on both sides of the check valve channel (46) are removably provided on the actuation part (44).

17. Check valve assembly according to according to any of claim 7 to 16, comprising cooperating positioning elements (74, 75) on the cylindrical portion (24) and on the actuation part (44), adapted to guide insertion of the actuation part (44) such that the actuation part (44) can be inserted in only one position, thereby preventing repositioning of the actuation part (44) in the wrong direction of flow.

18. Check valve assembly according to the preceding claim, wherein the positioning elements comprise ribs on one of the actuation part (44) and of the cylindrical portion (24) engaged with grooves on the other one of the actuation part (44) and the cylindrical portion (24).

19. Check valve assembly according to any of claims 7 to 18, further comprising axial stop elements to stop axial movement of the actuation part (44), in particular two projection stops on the actuation part (44) radially projecting towards the cylindrical portion (24) adapted to abut against the cylindrical portion (24) when the actuation part (44) has reached its axial position within the cylinder portion.

20. Check valve assembly according to the preceding claim, comprising a locking element (76, 79) to lock the actuation part (44) into the cylindrical portion (24) in the working position, and to allow the removal of the actuation part (44) only when the shut off element (20) is in the service position.

21. Check valve according to any of claims 7 to 20, wherein the cylindrical wall (25) of the cylindrical part (24) provides a seal which is adapted to withstand the pressure of fluid at the channel input port side when the shut off element (20) is in a service position.

22. Check valve assembly according to any of the preceding claims, wherein the housing (10), the shut off element (20) and/or the actuating element (44) are made of polymer.

23. Check valve assembly according to any of claims 1 to 2, wherein the shut off element (20) off is slideable from the working position to the service position, and vice-versa.

24. Hydraulic system comprising a check valve assembly according to any of claims 1 to 23.

25. Method of maintaining a check valve assembly according to any of claims 1 to 23, comprising
displacing the shut off element (20) from the working position to the service position, to stop the flow of fluid through the shut off element (20),
displacing the check valve receiving element (40) along said the shut off element axis (Y) to allow the removal of the check valve (60) from the check valve receiving element (40),
maintaining the check valve assembly, comprising at least one of cleaning the shut off element (20),
replacing the check valve (60) within the check valve receiving element (40), and/or
replacing sealing elements (85) within the check valve receiving element (40) and/or the removable holding element (65),
displacing the check valve receiving element (40) back into the shut off element (20), displacing the shut off element (20) back to the working position,
wherein the shut off element (20) is rotated by the check valve receiving element (40) between the working position and the service position,
**characterised in that** the replacing of the check valve (60) within the check valve receiving element (40) comprises accommodating the check valve (60) in the check valve receiving element (40).

26. Method according to claim 26, wherein the check valve receiving element (40) is the actuation part (44) of the actuation element (40),
the shut off element (20) is rotated around the shut off element axis (Y) by the actuation part (44),
the actuation part (44) is axially displaced along said the shut off element axis (Y) and removed from the shut off element (20),
and the check valve (60) is removed from the actuation part (44), so that the check valve (60) is removed from the shut off element (20) by a movement in a direction of the shut off element axis (Y) and a movement in the direction of the check valve axis.

## Patentansprüche

1. Rückschlagventilanordnung, umfassend
ein Hauptgehäuse (10) mit einem Hauptfluiddurchgang, der sich entlang einer Hauptströmungsachse (X) zwischen einer ersten Öffnung, der mit einem ersten Rohr verbindbar ist, und einer zweiten Öffnung, der mit einem zweiten Rohr verbindbar ist, erstreckt,
ein Absperrelement (20), das zumindest teilweise innerhalb des Hauptgehäuses angeordnet ist, wobei sich das Absperrelement entlang einer Absperrelementachse (Y) erstreckt,
ein Rückschlagventil (60),
wobei das Absperrelement (20) zwischen einer Arbeitsposition, in der das Absperrelement einen Fluidstrom zwischen der ersten Öffnung und der zweiten Öffnung und durch das Rückschlagventil ermöglicht, und einer Betriebsposition, die den Fluidstrom durch das Absperrelement (20) blockiert, bewegbar ist,
ein Rückschlagventilaufnahmeelement (40), das zumindest teilweise innerhalb des Hauptgehäuses angeordnet ist,
das Rückschlagventilaufnahmeelement (40) ein Betätigungselement zum Drehen des Absperrelements (20) zwischen der Arbeitsposition und der Betriebsposition und umgekehrt ist, **dadurch gekennzeichnet, dass**
das Rückschlagventilaufnahmeelement (40) zum lösbaren Aufnehmen des Rückschlagventils (60) in dem Rückschlagventilaufnahmeelement (40) dient, wobei das Rückschlagventilaufnahmeelement (40) nur dann entlang der Absperrelementachse (Y) bewegbar ist, wenn sich das Absperrelement (20) in der Betriebsposition befindet, um ein Entfernen des Rückschlagventils (60) zu ermöglichen,
das Rückschlagventilaufnahmeelement (40) fest innerhalb des Absperrelements (20) angeordnet ist, das im Wesentlichen in einer Querrichtung bewegbar ist, und
wobei das Rückschlagventil (60) in dem Betätigungselement aufgenommen ist.

2. Rückschlagventilanordnung nach Anspruch 1, wobei das Rückschlagventilaufnahmeelement (40) aus dem Hauptgehäuse (10) entfernbar ist, wenn sich das Absperrelement (20) in der Betriebsposition befindet.

3. Rückschlagventilanordnung nach einem der Ansprüche 1 bis 2, wobei das Absperrelement (20) aus der Arbeitsposition in die Betriebsposition und umgekehrt drehbar ist.

4. Rückschlagventilanordnung nach einem der Ansprüche 1 bis 3, wobei das Rückschlagventilaufnahmeelement (40) um die Absperrelementachse (Y) drehbar ist.

5. Rückschlagventilanordnung nach einem der vorhergehenden Ansprüche, wobei das Rückschlagventil eine Rückschlagventilachse aufweist und das Rückschlagventil (60) aus dem Absperrelement in einer Richtung entfernbar ist, die sich von der Rückschlagventilachse unterscheidet, insbesondere in einer Richtung senkrecht zu der Rückschlagventilachse, vorzugsweise in der Richtung entlang der Absperrelementachse (Y).

6. Rückschlagventilanordnung nach einem der vorhergehenden Ansprüche, wobei das Absperrelement (20) zylindrisch ist und wobei die Absperrelementachse (Y) orthogonal zu der Hauptströmungsachse (X) ist.

7. Rückschlagventilanordnung nach einem der Ansprüche 1 bis 6, wobei das Absperrelement (20) einen drehbaren zylindrischen Abschnitt (24) umfasst, der sich entlang der Absperrelementachse (Y) erstreckt, wobei das Betätigungselement (40) einen Benutzerbetätigungsabschnitt (42) und einen Betätigungsabschnitt (44) umfasst, wobei der Betätigungsabschnitt (44) lösbar in den zylindrischen Abschnitt (24) eingesetzt ist, insbesondere wobei der Betätigungsabschnitt (44) entlang der Absperrelementachse (Y) bewegbar ist, um den Betätigungsabschnitt (44) aus dem Absperrelement (20) zu entfernen, wenn sich das Absperrelement (20) in der Betriebsposition befindet.

8. Rückschlagventilanordnung nach Anspruch 7, wobei der zylindrische Abschnitt (24) eine zylindrische Wand (25) mit zwei diametral gegenüberliegenden Löchern (27, 28) umfasst, wobei in der Arbeitsposition die zwei diametral gegenüberliegenden Löcher (27, 28) mit der Einlassöffnung (17) und der Auslassöffnung (18) ausgerichtet sind und in der Absperrposition die zylindrische Wand (25) die Einlassöffnung (17) blockiert.

9. Rückschlagventilanordnung nach Anspruch 7 oder 8, wobei der zylindrische Abschnitt (24) und/oder ein Körpergehäuse (12) einen Boden aufweist/aufweisen, der mit einer oder mehreren Leckageöffnungen (13) versehen ist.

10. Rückschlagventilanordnung nach einem der Ansprüche 7 bis 9, wobei eine Bewegungsbeschränkungsvorrichtung bereitgestellt ist, um eine axiale Bewegung des zylindrischen Abschnitts (24) entlang der Anschlagelementachse zu verhindern.

11. Rückschlagventilanordnung nach dem vorhergehenden Anspruch, wobei die Bewegungsbeschränkungsvorrichtung mindestens einen von radialen Vorsprüngen des zylindrischen Abschnitts (24), die gegen eine Innenwand des Hauptgehäuses (10) vorstehen, vorzugsweise in Umfangsrichtung an einem Ende davon beabstandet sind, um den zylindrischen Abschnitt (24) in dem Hauptgehäuse (10) zu halten, und dem Boden des zylindrischen Abschnitts (24), der wieder auf dem Gehäuse aufliegt, umfasst.

12. Rückschlagventilanordnung nach einem der Ansprüche 7 bis 11, wobei der Betätigungsabschnitt (44) einen Ventilkanal (46) zwischen einer Kanaleinlassöffnung (47) und einer Kanalauslassöffnung (48) umfasst, um das Rückschlagventil (60) darin aufzunehmen, und wobei, wenn der Betätigungsabschnitt (44) in den zylindrischen Abschnitt (24) eingesetzt ist, die zwei diametral gegenüberliegenden Löcher (27, 28) des zylindrischen Abschnitts (24), die Kanaleinlassöffnung (47) und die Kanalauslassöffnung (48) des Ventilkanals (46) ausgerichtet sind, um einen Ventilfluiddurchgang (50) zu bilden.

13. Rückschlagventilanordnung nach Anspruch 12, wobei das Rückschlagventil (60) nur so in den Ventilkanal (46) eingesetzt werden kann, dass sich eine Auslassöffnung davon auf der Seite der Kanalauslassöffnung (48) befindet und sich ein Einlassöffnung davon auf der Seite der Kanaleinlassöffnung (47) befindet.

14. Rückschlagventilanordnung nach Anspruch 12 oder 13, wobei das Rückschlagventil (60) an einem Anschlagsitz (66) innerhalb des Betätigungsabschnitts (44) auf der Seite der Kanalauslassöffnung des Betätigungsabschnitts (44) anliegt und ein lösbares Halteelement (65) auf der Seite der Kanaleinlassöffnung bereitgestellt ist, um das Rückschlagventil (60) innerhalb des Ventilkanals (46) zu halten, wobei insbesondere das Halteelement (65) ein Loch aufweist, um im Gebrauch einen Fluidstrom zu ermöglichen.

15. Rückschlagventilanordnung nach den Ansprüchen 12 bis 14, wobei Dichtungselemente (85) auf beiden Seiten des Ventilkanals (46) bereitgestellt sind, wobei das Halteelement (65) mit einer lösbaren Dichtung versehen ist, die insbesondere aus EPDM hergestellt ist.

16. Rückschlagventil nach den Ansprüchen 12 bis 15, wobei mindestens eines der Dichtungselemente (85) auf beiden Seiten des Rückschlagventilkanals (46) lösbar an dem Betätigungsabschnitt (44) bereitgestellt ist.

17. Rückschlagventilanordnung nach einem der Ansprüche 7 bis 16, umfassend zusammenwirkende Positionierungselemente (74, 75) an dem zylindrischen Abschnitt (24) und an dem Betätigungsabschnitt (44), die dazu ausgelegt sind, das Einführen des Betätigungsabschnitts (44) derart zu führen, dass der Betätigungsabschnitt (44) in eine einzige Position eingeführt werden kann, wodurch eine Neupositionierung des Betätigungsabschnitts (44) in der falschen Strömungsrichtung verhindert wird.

18. Rückschlagventilanordnung nach dem vorhergehenden Anspruch, wobei die Positionierungselemente Rippen an einem von dem Betätigungsabschnitt (44) und dem zylindrischen Abschnitt (24) umfassen, die mit Nuten an dem anderen von dem Betätigungsabschnitt (44) und dem zylindrischen Abschnitt (24) in Eingriff stehen.

19. Rückschlagventilanordnung nach einem der Ansprüche 7 bis 18, ferner umfassend axiale Anschlagelemente zum Stoppen der axialen Bewegung des Betätigungsabschnitts (44), insbesondere zwei vorstehende Anschläge an dem Betätigungsabschnitt (44), die radial zu dem zylindrischen Abschnitt (24) vorstehen und dazu ausgelegt sind, an dem zylindrischen Abschnitt anzuliegen, wenn der Betätigungsabschnitt (44) seine axiale Position innerhalb des zylindrischen Abschnitts erreicht hat.

20. Rückschlagventilanordnung nach dem vorhergehenden Anspruch, umfassend ein Verriegelungselement (76, 79) zum Verriegeln des Betätigungsabschnitts (44) in dem zylindrischen Abschnitt (24) in der Arbeitsposition und zum Ermöglichen eines Entfernens des Betätigungsabschnitts (44) nur dann, wenn sich das Absperrelement (20) in der Betriebsposition befindet.

21. Rückschlagventil nach einem der Ansprüche 7 bis 20, wobei die zylindrische Wand (25) des zylindrischen Abschnitts (24) eine Dichtung bereitstellt, die dazu ausgelegt ist, dem Fluiddruck auf der Seite der Kanaleinlassöffnung zu widerstehen, wenn sich das Absperrelement (20) in der Betriebsposition befindet.

22. Rückschlagventilanordnung nach einem der vorhergehenden Ansprüche, wobei das Gehäuse (10), das Absperrelement (20) und/oder das Betätigungselement (44) aus Polymer sind.

23. Rückschlagventilanordnung nach einem der Ansprüche 1 bis 2, wobei das Absperrelement (20) aus der Arbeitsposition in die Betriebsposition und umgekehrt verschiebbar ist.

24. Hydrauliksystem, umfassend eine Rückschlagventilanordnung nach einem der Ansprüche 1 bis 23.

25. Verfahren zum Halten einer Rückschlagventilanordnung nach einem der Ansprüche 1 bis 23, umfassend
Bewegen des Absperrelements (20) aus der Arbeitsposition in die Betriebsposition, um den Fluidstrom durch das Absperrelement (20) zu stoppen,
Bewegen des Rückschlagventilaufnahmeelements (40) entlang der Absperrelementachse Y, um ein Entfernen des Rückschlagventils (60) aus dem Rückschlagventilaufnahmeelement (40) zu ermöglichen,
Instandhalten der Rückschlagventilanordnung, umfassend mindestens eines der Folgenden:
Reinigen des Absperrelements (20), Ersetzen des Rückschlagventils (60) in dem Rückschlagventilaufnahmeelement (40) und/oder Ersetzen der Dichtungselemente (85) in dem Rückschlagventilaufnahmeelement (40) und/oder dem abnehmbaren Haltelement (65),
Zurückbringen des Rückschlagventilaufnahmeelements (40) in das Absperrelement (20),
Zurückbringen des Absperrelements (20) in die Arbeitsposition,
wobei das Absperrelement (20) durch das Rückschlagventilaufnahmeelement (40) zwischen der Arbeitsposition und der Betriebsposition gedreht wird,
**dadurch gekennzeichnet, dass** das Ersetzen des Rückschlagventils (60) in dem Rückschlagventilaufnahmeelement (40) ein Aufnehmen des Rückschlagventils (60) in dem Rückschlagventilaufnahmeelement (40) umfasst.

26. Verfahren nach Anspruch 26, wobei das Rückschlagventilaufnahmeelement (40) der Betätigungsabschnitt (44) des Betätigungselements (40) ist,
das Absperrelement durch den Betätigungsabschnitt (44) um die Absperrelementachse (Y) gedreht wird,
der Betätigungsabschnitt (44) axial entlang der Absperrelementachse (Y) bewegt wird und aus dem Absperrelement (20) entfernt wird,
und das Rückschlagventil (60) aus dem Betätigungsabschnitt (44) entfernt wird, sodass das Rückschlagventil (60) durch eine Bewegung in einer Richtung der Absperrelementachse Y und eine Bewegung in der Richtung der Rückschlagventilachse aus dem Absperrelement (20) entfernt wird.

## Revendications

1. Ensemble de clapet anti-retour comprenant
un boîtier principal (10) ayant un passage de fluide principal s'étendant le long d'un axe d'écoulement principal (X) entre un premier orifice pouvant être connecté à un premier tuyau et un second orifice pouvant être connecté à un second tuyau,
un élément d'arrêt (20) disposé au moins en partie à l'intérieur du boîtier principal, ledit élément d'arrêt s'étendant le long d'un axe d'élément d'arrêt (Y),
un clapet anti-retour (60),
dans lequel l'élément d'arrêt (20) est déplaçable entre une position de travail dans laquelle l'élément d'arrêt permet un écoulement de fluide entre le premier orifice et le deuxième orifice et à travers le clapet anti-retour, et une position de service bloquant l'écoulement de fluide à travers l'élément d'arrêt (20),
un élément de réception de clapet anti-retour (40) disposé au moins en partie à l'intérieur du boîtier principal,
l'élément de réception de clapet anti-retour (40) est un élément d'actionnement pour faire tourner l'élément d'arrêt (20), entre la position de travail et la position de service et vice-versa,
**caractérisé en ce que**
l'élément de réception de clapet anti-retour (40) est pour loger de manière amovible le clapet anti-retour (60) dans l'élément de réception de clapet anti-retour (40), l'élément de réception de clapet anti-retour (40) pouvant être déplacé le long de l'axe d'élément d'arrêt (Y) uniquement lorsque l'élément d'arrêt (20) est en position de service pour permettre le retrait du clapet anti-retour (60),
l'élément de réception de clapet anti-retour (40) est disposé de manière fixe à l'intérieur de l'élément d'arrêt (20) déplaçable sensiblement dans une direction transversale, et
dans lequel le clapet anti-retour (60) est logé dans l'élément d'actionnement.

2. Ensemble de clapet anti-retour selon la revendication 1, dans lequel l'élément de réception de clapet anti-retour (40) peut être retiré du boîtier principal (10) lorsque l'élément d'arrêt (20) est en position de service.

3. Ensemble de clapet anti-retour selon l'une des revendications 1 à 2, dans lequel l'élément d'arrêt (20) est rotatif de la position de travail à la position de service, et vice versa.

4. Ensemble de clapet anti-retour selon l'une quelconque des revendications 1 à 3, dans lequel l'élément de réception de clapet anti-retour (40) est rotatif autour dudit axe d'élément d'arrêt (Y).

5. Ensemble de clapet anti-retour selon l'une quelconque des revendications précédentes, dans lequel le clapet anti-retour a un axe de clapet anti-retour et le clapet anti-retour (60) peut être retiré de l'élément d'arrêt dans une direction différente de l'axe de clapet anti-retour, en particulier dans une direction perpendiculaire à l'axe de clapet anti-retour, de préférence dans la direction le long dudit axe d'élément d'arrêt (Y).

6. Ensemble de clapet anti-retour selon l'une des revendications précédentes, dans lequel l'élément d'arrêt (20) est cylindrique et dans lequel l'axe d'élément d'arrêt (Y) est orthogonal à l'axe d'écoulement principal (X).

7. Ensemble de clapet anti-retour selon l'une quelconque des revendications 1 à 6, dans lequel l'élément d'arrêt (20) comprend une partie cylindrique rotative (24) s'étendant le long dudit axe d'élément d'arrêt (Y), dans lequel l'élément d'actionnement (40) comprend une partie d'opération par utilisateur (42) et une partie d'actionnement (44), la partie d'actionnement (44) étant insérée de manière amovible dans la partie cylindrique (24), en particulier dans lequel la partie d'actionnement (44) peut être déplacée le long dudit axe d'élément d'arrêt (Y) pour retirer la partie d'actionnement (44) de l'élément d'arrêt (20) lorsque l'élément d'arrêt (20) est dans la position de service.

8. Ensemble de clapet anti-retour selon la revendication 7, dans lequel la partie cylindrique (24) comprend une paroi cylindrique (25) avec deux trous diamétralement opposés (27, 28), dans lequel, dans la position de travail, les deux trous diamétralement opposés (27, 28) sont alignés avec l'orifice d'entrée (17) et l'orifice de sortie (18), et dans la position d'arrêt, la paroi cylindrique (25) obstrue l'orifice d'entrée (17).

9. Ensemble de clapet anti-retour selon la revendication 7 ou 8, dans lequel la partie cylindrique (24) et/ou un boîtier de corps (12) a/ont un fond pourvu d'un ou plusieurs orifices de fuite (13).

10. Ensemble de clapet anti-retour selon l'une quelconque des revendications 7 à 9, dans lequel un dispositif de restriction de mouvement est prévu pour empêcher le mouvement axial de la partie cylindrique (24) le long de l'axe d'élément d'arrêt.

11. Ensemble de clapet anti-retour selon la revendication précédente, dans lequel le dispositif de restriction de mouvement comprend au moins une parmi des projections radiales de la partie cylindrique (24) faisant saillie contre une paroi intérieure du boîtier principal (10), de préférence espacées circonférentiellement à une extrémité de celui-ci, pour maintenir la partie cylindrique (24) dans le boîtier principal (10), et du fond de la partie cylindrique (24) reposant à nouveau sur le boîtier.

12. Ensemble de clapet anti-retour selon l'une quelconque des revendications 7 à 11, dans lequel la partie d'actionnement (44) comprend un canal de clapet (46) entre un orifice d'entrée de canal (47) et un orifice de sortie de canal (48) pour y loger le clapet anti-retour (60), et dans lequel, lorsque la pièce d'actionnement (44) est insérée dans la partie cylindrique (24), les deux trous diamétralement opposés (27, 28) de la partie cylindrique (24), l'orifice d'entrée de canal (47) et l'orifice de sortie de canal (48) du canal de clapet (46) sont alignés pour former un passage de fluide de clapet (50).

13. Ensemble de clapet anti-retour selon la revendication 12, dans lequel le clapet anti-retour (60) ne peut être inséré dans le canal de clapet (46) que de telle sorte qu'un orifice de sortie de celui-ci se trouve du côté de l'orifice de sortie de canal (48) et un orifice d'entrée de celui-ci du côté de l'orifice d'entrée de canal (47).

14. Ensemble de clapet anti-retour selon la revendication 12 ou 13, dans lequel le clapet anti-retour (60) vient en butée contre un siège d'arrêt (66) à l'intérieur de la partie d'actionnement (44) du côté de l'orifice de sortie de canal de la partie d'actionnement (44), et un élément de maintien amovible (65) du côté de l'orifice d'entrée de canal est prévu pour maintenir le clapet anti-retour (60) à l'intérieur du canal de clapet (46), en particulier l'élément de maintien (65) ayant un trou pour permettre l'écoulement de fluide, en utilisation.

15. Ensemble de clapet anti-retour selon les revendications 12 à 14, dans lequel des éléments d'étanchéité (85) sont prévus des deux côtés du canal de clapet (46), dans lequel l'élément de maintien (65) est pourvu d'un joint amovible, en particulier fabriqué en EPDM.

16. Clapet anti-retour selon les revendications 12 à 15, dans lequel au moins un des éléments d'étanchéité (85) des deux côtés du canal de clapet anti-retour (46) est prévu de manière amovible sur la partie d'actionnement (44).

17. Ensemble de clapet anti-retour selon l'une quelconque des revendications 7 à 16, comprenant des éléments de positionnement coopérants (74, 75) sur la partie cylindrique (24) et sur la partie d'actionnement (44), adaptés pour guider l'insertion de la partie d'actionnement (44) de telle sorte que la partie d'actionnement (44) puisse être insérée dans une seule position, empêchant ainsi le repositionnement de la partie d'actionnement (44) dans la mauvaise direction d'écoulement.

18. Ensemble de clapet anti-retour selon la revendication précédente, dans lequel les éléments de positionnement comprennent des nervures sur l'une parmi la partie d'actionnement (44) et la partie cylindrique (24) engagées avec des rainures sur l'autre parmi la partie d'actionnement (44) et la partie cylindrique (24).

19. Ensemble de clapet anti-retour selon l'une quelconque des revendications 7 à 18, comprenant en outre des éléments de butée axiale pour arrêter le mouvement axial de la partie d'actionnement (44), en particulier deux butées de projection sur la partie d'actionnement (44) faisant saillie radialement vers la partie cylindrique (24) adaptées pour buter contre la partie cylindrique lorsque la partie d'actionnement (44) a atteint sa position axiale à l'intérieur de la partie cylindrique.

20. Ensemble de clapet anti-retour selon la revendication précédente, comprenant un élément de verrouillage (76, 79) pour verrouiller la partie d'actionnement (44) dans la partie cylindrique (24) en position de travail, et pour permettre le retrait de la partie d'actionnement (44) uniquement lorsque l'élément d'arrêt (20) est en position de service.

21. Clapet anti-retour selon l'une des revendications 7 à 20, dans lequel la paroi cylindrique (25) de la partie cylindrique (24) fournit un joint qui est adapté pour résister à la pression du fluide du côté de l'orifice d'entrée de canal lorsque l'élément d'arrêt (20) est en position de service.

22. Ensemble de clapet anti-retour selon l'une des revendications précédentes, dans lequel le boîtier (10), l'élément d'arrêt (20) et/ou l'élément d'actionnement (44) sont en polymère.

23. Ensemble de clapet anti-retour selon l'une des revendications 1 à 2, dans lequel l'élément d'arrêt (20) peut coulisser de la position de travail à la position de service, et vice versa.

24. Système hydraulique comprenant un ensemble de clapet anti-retour selon l'une des revendications 1 à 23.

25. Procédé de maintien d'un ensemble de clapet anti-retour selon l'une quelconque des revendications 1 à 23, comprenant
déplacer l'élément d'arrêt (20) de la position de travail à la position de service, pour arrêter l'écoulement du fluide à travers l'élément d'arrêt (20),
déplacer l'élément de réception de clapet anti-retour (40) le long de l'axe d'élément d'arrêt Y pour permettre le retrait du clapet anti-retour (60) de l'élément de réception de clapet anti-retour (40),
faire la maintenance de l'ensemble de clapet anti-retour, comprenant au moins l'un des éléments suivants : le nettoyage de l'élément d'arrêt (20), le remplacement du clapet anti-retour (60) dans l'élément de réception de clapet anti-retour (40), et/ou le remplacement des éléments d'étanchéité (85) dans l'élément de réception de clapet anti-retour (40) et/ou l'élément de maintien amovible (65),
replacer l'élément de réception de clapet anti-retour (40) dans l'élément d'arrêt (20),
replacer l'élément d'arrêt (20) en position de travail,
dans lequel l'élément d'arrêt (20) est tourné par l'élément de réception de clapet anti-retour (40) entre la position de travail et la position de service,
**caractérisé en ce que** le remplacement du clapet anti-retour (60) dans l'élément de réception de clapet anti-retour (40) comprend loger le clapet anti-retour (60) dans l'élément de réception de clapet anti-retour (40).

26. Procédé selon la revendication 26, dans lequel l'élément de réception de clapet anti-retour (40) est la partie d'actionnement (44) de l'élément d'actionnement (40),
l'élément d'arrêt est tourné autour de l'axe d'élément d'arrêt (Y) par la partie d'actionnement (44),
la partie d'actionnement (44) est déplacée axialement le long de l'axe d'élément d'arrêt (Y) et est retirée de l'élément d'arrêt (20),
et le clapet anti-retour (60) est retiré de la partie d'actionnement (44), de sorte que le clapet anti-retour (60) est retiré de l'élément d'arrêt (20) par un mouvement dans une direction de l'axe d'élément d'arrêt Y et un mouvement dans la direction de l'axe de clapet anti-retour.
